(19) **Europäisches Patentamt / European Patent Office / Office européen des brevets**

(11) **EP 1 879 400 A1**

(12) # EUROPEAN PATENT APPLICATION

(43) Date of publication:
**16.01.2008 Bulletin 2008/03**

(51) Int Cl.:
*H04N 7/26* (2006.01)

(21) Application number: **07252706.2**

(22) Date of filing: **05.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **11.07.2006 GB 0613759**

(71) Applicant: **Tandberg Television ASA
0607 Oslo (NO)**

(72) Inventors:
- **Huggett, Anthony Richard
  Eastleigh S050 5PZ (GB)**
- **Bock, Alois
  Eastleigh SO53 4RH (GB)**

(74) Representative: **Want, Clifford James
  Harrison Goddard Foote
  40-43 Chancery Lane
  London WC2A 1JA (GB)**

(54) **Motion estimation in image processing systems**

(57)    A motion estimator 50 for image processing finds a motion vector from a search area in a reference picture to a source macroblock in a source picture by finding a maximum of a 2-dimensional normalised cross-correlation surface between the source macroblock and a portion of the reference search area using a transform domain.

**Figure 5**

$$C = \frac{\left(\Im^{-1}\left(\Im(R)\Im(s_{x,y} - \bar{s}_{0,0})^{*}\right)\right)^2}{\left(\Im^{-1}\left(\Im(R^2)\Im(N)^{*}\right) - \left(\Im^{-1}\left(\frac{\Im(R)\Im(N)^{*}}{16}\right)\right)^2\right)}$$

**Description**

This invention relates to motion estimation in image processing systems and especially to using cross correlation.

In particular, the invention addresses a problem of searching for a best match between a small portion of a source picture with a correspondingly shaped and sized portion of another picture which is taken as a reference picture. If a shape of the source portion is constrained to be a square macroblock of 16×16 pels taken from the source picture, and the reference picture is drawn from another place nearby in the same video sequence, this application becomes a familiar problem of block-based motion estimation, which is commonly used within a process of video compression.

In principle, a standard mathematical technique of cross-correlation may be applied to the problem of block-based motion estimation instead of a more usual sum of absolute differences (SAD) method.

Furthermore, it is well known in the literature that an un-normalized 2-D cross correlation surface may be efficiently calculated by means of a 2-dimensional Fourier transform. However, un-normalised cross correlation does not work very well for motion estimation.

It is an object of the present invention at least to ameliorate the aforesaid deficiency in the prior art.

According to a first aspect of the invention, there is provided a motion estimator for image processing arranged to find a motion vector from a portion of a search area in a reference picture to a portion of a source picture by finding a maximum of a 2-dimensional normalised cross-correlation coefficients surface between the portion of the source picture and the portions of the reference search area using a transform domain.

Preferably, the motion estimator further comprises: an arithmetic mean stage connected to a first input of the motion estimator arranged to obtain an arithmetic mean of a first sequence representing elements of the portion of the source picture and to subtract the arithmetic mean from each element to form a zero-mean sequence; a padding stage connected to the arithmetic mean stage arranged to pad the zero-mean sequence with zeros to a length of a second sequence representing the reference search area to form a padded sequence; a first two-dimensional fast Fourier transform stage connected to the padding stage arranged to obtain a Fourier transform of the padded sequence; a complex conjugate stage connected to the first two-dimensional fast Fourier transform stage and arranged to form a complex conjugate of the transformed padded sequence.

Preferably, the motion estimator further comprises: a second two-dimensional fast Fourier transform stage connected to a second input of the motion estimator and arranged to perform a fast Fourier transformation of the second sequence; a multiplication stage connected to the complex conjugate stage and to the second two-dimensional fast Fourier transform stage and arranged to multiply the elements of the complex conjugate of the transformed padded sequence by the elements of the transformed second sequence to form a transformed un-normalised cross-correlation; a first two-dimensional inverse fast Fourier transform stage connected to the multiplication stage and arranged to form a un-normalised cross-correlation; and a magnitude squaring stage connected to the first two-dimensional inverse fast Fourier transform stage and arranged to square the magnitude of the elements of the un-normalised cross-correlation to form a squared un-normalised cross-correlation.

Preferably, the motion estimator further comprises: a second squaring stage connected to the second input of the motion estimator and arranged to square the elements of the second sequence to form a squared search area; a third two-dimensional fast Fourier transform stage connected to the second squaring stage and arranged to form a transform of the squared search area; a third multiplication stage connected to the third two-dimensional fast Fourier transform stage and arranged to multiply by a complex conjugate of a Fourier transform of a normalisation matrix to form transformed local sums of the squared search area; and a third two-dimensional inverse fast Fourier transform stage connected to the third multiplication stage and arranged to form local sums of the squared search area.

Advantageously, the motion estimator further comprises: a second multiplication stage connected to the second two-dimensional fast Fourier transform stage arranged to multiply the elements of the transformed search area by a complex conjugate of a Fourier transformed normalisation matrix to form transformed local sums; a second two-dimensional inverse fast Fourier transform stage connected to the second multiplication stage and arranged to form a local sum for each element; a first squaring stage connected to the second two-dimensional inverse fast Fourier transform stage and arranged to square the local sum to form a squared local sum; a divider stage connected to the first squaring stage and arranged to divide the squared local sum by a number of elements in the first sequence to form a scaled squared local sum; a subtraction stage connected to the divider stage and to the third two-dimensional inverse fast Fourier transform stage and arranged to subtract the scaled squared local sum from the local sums of the squared search area to form a squared normalisation factor of the normalised cross-correlation coefficient.

Conveniently, the motion estimator further comprises: a second divisor stage connected to the subtraction stage and to the magnitude squaring stage and arranged to divide the squared un-normalised correlation factor by the squared normalisation factor to form a square of the normalised cross-correlation coefficient and output to a maximising stage arranged to maximise the normalised cross-correlation coefficient to find an optimum motion vector for the source macroblock.

Advantageously, the motion estimator is adapted for a video signal having interlaced fields in which the fields are processed in parallel as real and imaginary parts respectively.

Conveniently, the motion estimator further comprises a first split field stage connected to the first input arranged to split the first sequence into two sequences representing first and second interlaced fields respectively and parallel streams as described above for calculating the numerators of the normalised cross-correlation coefficient for each field respectively.

According to a second aspect of the invention, there is provided a method of estimating motion for image processing comprising the steps of finding a motion vector from a portion of a search area in a reference picture to a portion of a source picture by finding a maximum of a 2-dimensional normalised cross-correlation coefficient between the portion of the source picture and the portion of the reference search area using a transform domain.

Preferably, the method further comprises steps of: forming a first sequence representing elements of the portion of the source picture; obtaining an arithmetic mean of the elements and subtracting the arithmetic mean from each element to form a zero-mean sequence; padding the zero-mean sequence with zeros to a length of a second sequence representing the reference search area to give a padded sequence; performing a two-dimensional fast Fourier transform of the padded sequence to form a transformed padded sequence; forming a complex conjugate of the transformed padded sequence.

Advantageously, the method comprises the further steps of: performing a two-dimensional fast Fourier transform of the second sequence; multiplying the elements of the complex conjugate of the transformed padded sequence by the elements of the transformed second sequence to form a transformed un-normalised cross-correlation coefficient; forming a un-normalised cross-correlation by inverse transformation of the transformed un-normalised cross-correlation coefficient; squaring the transformed un-normalised cross-correlation to form a squared transformed un-normalised cross-correlation coefficient.

Conveniently, the method further comprises further steps of: squaring the elements of the second sequence to form a squared search area; forming a two-dimensional fast Fourier transform of the squared search area to form a transformed squared search area; multiplying by a complex conjugate of a Fourier transform of a normalisation matrix to form transformed local sums of the squared search area; performing a two-dimensional inverse Fourier transform of the transformed local sums of the squared search area to form local sums of the squared search area.

Advantageously, the method comprises further steps of: normalising the Fourier transformed search area by multiplying the elements by a complex conjugate of a Fourier transformed normalisation matrix to form a transformed local sum; performing a two-dimensional inverse Fourier transform of the transformed local mean to form a local sum for each element; squaring the elements of the local sum to form a squared local sum; dividing the squared local sum by the number of elements in the first sequence to form a scaled squared local sum; subtracting the scaled squared local sum from the local sums of the squared search area to form a squared normalisation factor of the normalised cross-correlation coefficient.

Conveniently, the method further comprises dividing the squared un-normalised correlation factor by the squared normalisation factor to form a square of the normalised cross-correlation coefficient and maximising the normalised cross-correlation coefficient to find an optimum motion vector for the source macroblock.

Advantageously for a video signal having interlaced fields, the fields are processed in parallel as real and imaginary parts respectively.

According to a third aspect of the invention, there is a provided a computer program comprising code means for performing all the steps of the method described above when the program is run on one or more computers.

The invention will now be described, by way of example, with reference to the accompanying drawings in which:

Figure 1 is a schematic diagram of block matching of source and reference pictures, helpful in understanding the invention;

Figure 2 is a graphical illustration of matching of sequences of equal length, helpful in understanding the invention;

Figure 3 is a graphical illustration of matching of sequences of unequal length, helpful in understanding the invention;

Figure 4 is a graphical illustration of use of normalisation for matching sequences of unequal length, as used in the invention;

Figure 5 is a schematic drawing of a first embodiment of a motion estimator according to the invention;

Figure 6 is a schematic diagram of reduced Fourier transformation between a portion of a source picture smaller than a search area in a reference picture, helpful in understanding an embodiment of the invention; and

Figure 7 is a schematic diagram of a second embodiment of a motion estimator according to the invention, suitable for an interlaced video signal.

In the Figures, like reference numerals denote like parts.

In this invention there is described a matching criterion based on a local normalised cross correlation coefficient. A transform domain method for calculating this criterion and apparatus for performing this calculation within motion estimation by means of the normalised 2-dimensional cross correlation coefficient are disclosed, together with some optimisations in the transform sequence which reduce the computational load.

For the approach presented herein, a shape of a chosen portion of the source picture is arbitrary. That is, the invention may be applied to any shape of portion, but will be described in terms of a square macroblock without loss of generality.

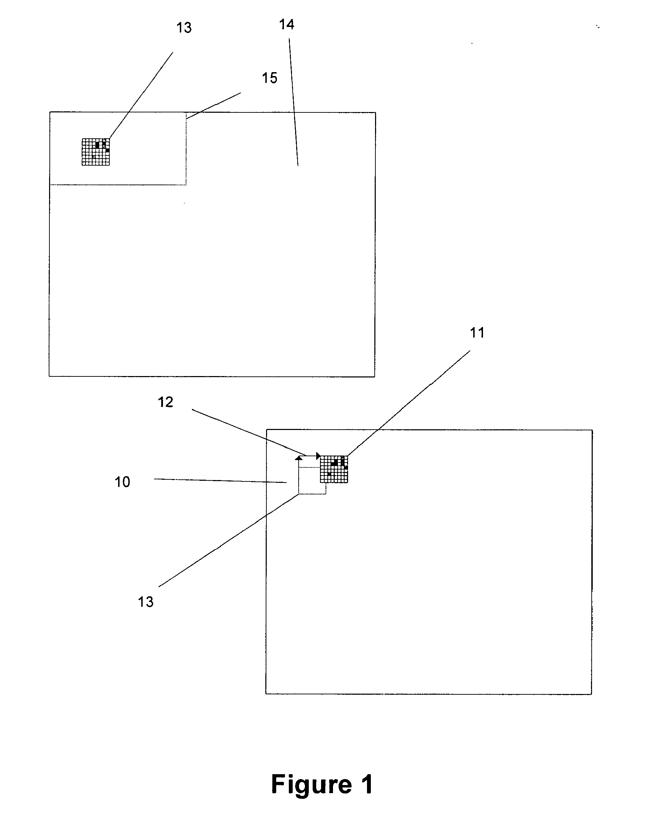

Figure 1 shows such a scheme. A source macroblock 11, which is an array of 16 by 16 pels, in a source image 10 is to be predicted by a motion-vector 12 from a best match area 13 in a search window 15 of a reference image 14.

**The Matching Criterion**

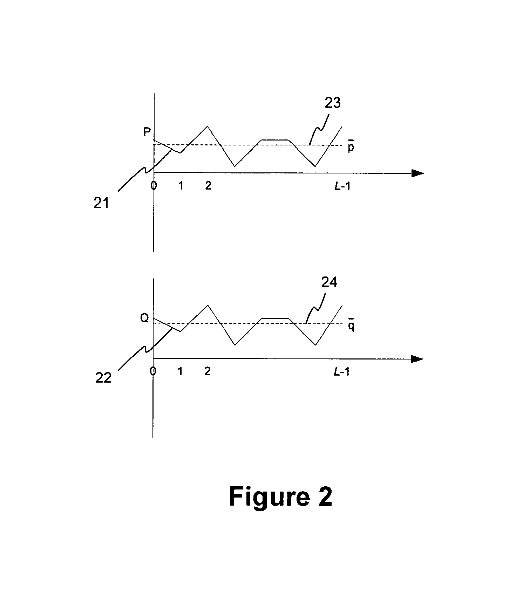

A normalised cross correlation coefficient is commonly used within the literature to describe a degree to which two series of numbers are related. Figure 2 shows graphically two such series of numbers 21, 22 together with their means, illustrated by the broken lines 23, 24 respectively. This example is one dimensional for the purposes of simplifying this description and may, without loss of generality, be expanded to two or more dimensions.

The normalised cross-correlation coefficient between two 1-dimensional L-element discrete-time sequences of real numbers, $P = \{P_0, P_1,..., P_{15}\}$ and $Q = \{q_0, q_1,..., q_{15}\}$, is defined as:

$$c_0 = \frac{\sum_{x=0}^{L-1}(p_x - \overline{p}_0)(q_x - \overline{q}_0)}{\sqrt{\left(\sum_{x=0}^{L-1}(p_x - \overline{p}_0)^2\right)\left(\sum_{x=0}^{L-1}(q_x - \overline{q}_0)^2\right)}} \qquad \text{Equation 1}$$

where $\overline{P}_0$ is the mean of $P$ given by equation 2:

$$\overline{p}_0 = \frac{p_0 + p_1 + ... + p_{L-1}}{L} = \frac{1}{L}\sum_{x=0}^{L-1}p_x \qquad \text{Equation 2}$$

and similarly $\overline{q}_0$ is the mean of Q given by equation 3:

$$\overline{q}_0 = \frac{1}{L}\sum_{x=0}^{L-1}q_x \qquad \text{Equation 3}$$

An effect of subtracting the mean of each series from every element is to make the resultant series have zero mean. The cross-correlation coefficient between two zero mean series is then described as the sum of the elemental products of the series divided by the square root of the product of the sums of the elemental squares of each series.

The normalised cross-correlation coefficient has an interesting property that it is 1 if one zero-mean series is a positive scaled version of the other, -1 if a negative scaled version, and lies between -1 and 1 otherwise, with 0 indicating no correlation at all.

**Matching part of a series**

The above example illustrates the case where the two sequences are identical in length. In a block matching situation for image compression this is not usually the case and so a problem is now considered of matching if $P$ has $M$ elements and is longer than $Q$. The sequence $Q$ might be padded with zeros to a same length as $P$, and the cross-correlation computed as before. By moving the location of the padding, alternative matching positions can be considered.

For matching positions $i \in \{0,1,2,\cdots,M - L\}$. this is mathematically described as:

$$c_i = \frac{\sum_{x=0}^{L-1}(p_{i+x} - \overline{p})(q_x - \overline{q}) + \sum_{x=L}^{M-1}(p_{i+x} - \overline{p})(0 - \overline{q})}{\sqrt{\left(\sum_{x=0}^{M-1}(p_x - \overline{p})^2\right)\left(\sum_{x=0}^{L-1}(q_x - \overline{q})^2 + \sum_{x=L}^{M}(0 - \overline{q})^2\right)}} \qquad \text{Equation 4}$$

where $\overline{p}$ is the mean of $P$ given by equation 5:

$$\overline{p} = \frac{p_0 + p_1 + \cdots + p_{M-1}}{M} = \frac{1}{M}\sum_{x=0}^{M-1}p_x \qquad \text{Equation 5}$$

and similarly $\overline{q}$ is the mean of the padded series $Q$ given by equation 6:

$$\overline{q} = \frac{1}{M}\left(\sum_{x=0}^{L-1}q_x + \sum_{x=L}^{M-1}0\right) = \frac{1}{M}\sum_{x=0}^{L-1}q_x \qquad \text{Equation 6}$$

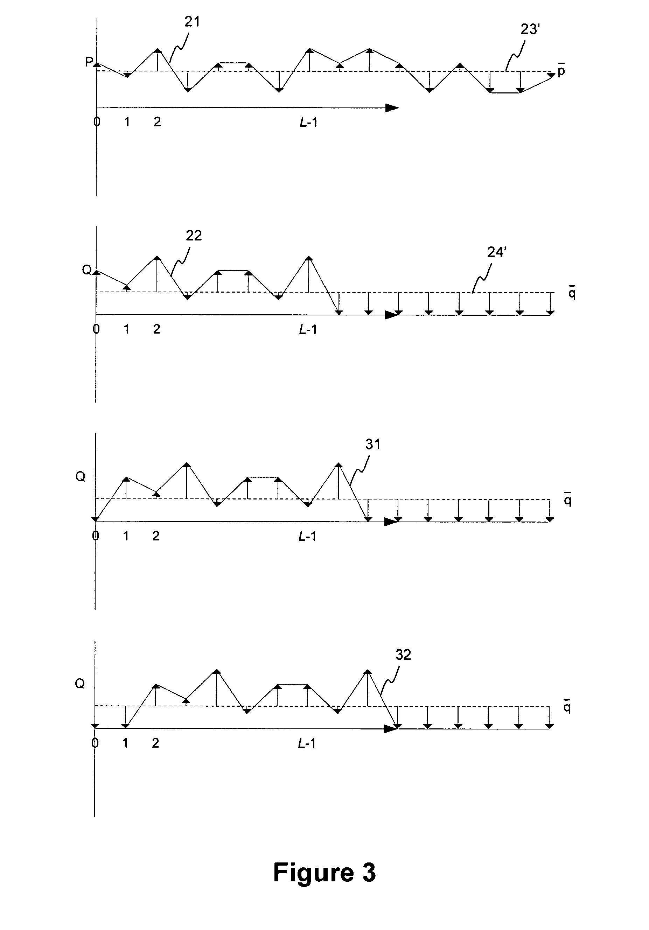

As can be seen from a comparison of Figure 3 with Figure 2, an effect of zero padding on $Q$, and to a lesser extent the extension of $P$ with more data, shifts the respective means 23', 24' of each series. This changes the zero mean series, represented by vertical arrows, so that the two series no longer look similar, and the effect is to diminish the cross correlation coefficient so that the method does not work very well. The lower two graphs, 31, 32 show shifts of the series $Q$ to align differently with the series $P$.

**Local Normalised Cross-Correlation**

Rather than calculate a mean of a zero padded sequence, instead a mean of the original, un-normalised sequence $Q$ is calculated and this mean is subtracted from each element before padding with zeros. The mean of $P$ is calculated only over elements which are correlated with the unpadded elements of $Q$ at every point. This means that $\overline{p}$ is now different for every value of i, denoted by $\overline{p}_i$, which is given by:

$$\overline{p}_i = \frac{p_i + p_{i+1} + \cdots + p_{i+L-1}}{L} = \frac{1}{L}\sum_{x=0}^{L-1}p_{i+x} \qquad \text{Equation 7}$$

This allows definition of a one-dimensional matching criterion as the maximum value over the range $i \in \{0,1,2,\cdots, M - L\}$ of the local normalised cross-correlation coefficient given by:

$$c_i = \frac{\sum_{x=0}^{L-1}(p_{i+x} - \bar{p}_i)(q_x - \bar{q})}{\sqrt{\left(\sum_{x=0}^{L-1}(p_{i+x} - \bar{p}_i)^2\right)\left(\sum_{x=0}^{L-1}(q_x - \bar{q})^2\right)}} \qquad \text{Equation 8}$$

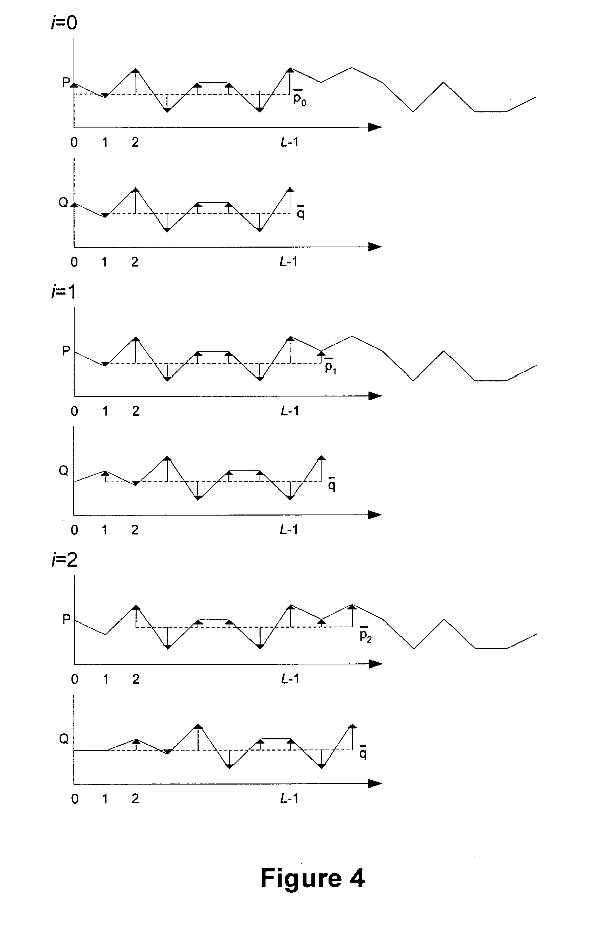

Figure 4 shows this graphically. The local means $\bar{p}_i$ change between matching positions, but the best match is no longer weakened.

**Extension to more than one dimension**

The extension to two dimensions is straightforward. Let R = {$r_{x,y}$} be the reference image and $S$ = {$S_{x,y}$} be a source macroblock of size 16 by 16 pixels. The 2-dimensional normalised cross-correlation coefficient may be calculated as:

$$c_{i,j} = \frac{\sum_{x=0}^{15}\sum_{y=0}^{15}(r_{x+i,y+j} - \bar{r}_{i,j})(s_{x,y} - \bar{s})}{\sqrt{\left(\sum_{x=0}^{15}\sum_{y=0}^{15}(r_{x+i,y+j} - \bar{r}_{i,j})^2\right)\left(\sum_{x=0}^{15}\sum_{y=0}^{15}(s_{x,y} - \bar{s})^2\right)}} \qquad \text{Equation 9}$$

where

$$\bar{s} = \frac{1}{256}\sum_{x=0}^{15}\sum_{y=0}^{15}s_{x,y} \qquad \text{Equation 10}$$

i.e. the mean of the source macroblock and

$$\bar{r}_{i,j} = \frac{1}{256}\sum_{x=0}^{15}\sum_{y=0}^{15}r_{x+i,y+j} \qquad \text{Equation 11}$$

i.e. the mean of the area of the reference image which is compared to the source macroblock in this position.

Since S represents the source macroblock which we are seeking to match, and R represents the (larger) reference search area then it is clear that if the normalised cross-correlation surface C can be calculated, then searching (exhaustively) within this surface for the largest $C_{i,j}$ will provide the position of the closest match according to this criterion with a motion vector [$i,j$]. Unfortunately this is prohibitively expensive to calculate directly.

A two-dimensional zero-mean macroblock can be calculated. This needs to be calculated once only regardless of a size of a search window 15, and does not significantly contribute to an overall load, requiring 255 additions to calculate the mean, and 256 subtractions to form the zero-mean source macroblock. 256 multiplications and 255 additions are then required to form the $\sum_{x=0}^{15}\sum_{y=0}^{15}(s_{x,y} - \bar{s}_{0,0})^2$ term in the denominator.

Considering the case of a 256 by 128 search window 15, and a 16 by 16 macroblock 13, it would be necessary to calculate values of $c_{i,j}$ for $0 \leq i \leq 240$ and $0 \leq j \leq 112$. That is 27,233 elements.

Each element requires 255 additions to calculate $\bar{r}_{i,j}$, 256 subtractions to calculate $(r_{x+i,y+j} - \bar{r}_{i,j})$, 256 multiplications and 255 additions to obtain the numerator of equation 9, with a further 256 multiplications and 255 additions to form the

$$\sum_{x=0}^{15} \sum_{y=0}^{15} \left( r_{x+i,y+j} - \bar{r}_{i,j} \right)^2$$ terms. One further multiplication and 1 square root is required to form the denominator of equation 9.

So in total the computational load is:

$255 + 256 + 255 + 27233*(255 + 256 + 255 + 255) = 27,805,659$ additions, $256 + 27233*(256 + 256 + 1) = 13,970,785$ multiplies and 27,233 square roots. In practice it might be chosen to match on the squared normalised cross-correlation, which means using an extra 27,233 multiplies on the top line, to square it, in place of the square roots on the bottom line.

In typical applications requiring this process, only 24 microseconds are available to process each macroblock before a next one arrives, which means it would be necessary to perform 1.125E12 additions and 6.125E11 multiplications per second, which is not economically viable and is practically challenging. A practical solution requires a different approach.

### Method for calculation of the matching criterion in the transform domain

The method and apparatus described below implement the calculations required to fulfil the analysis presented above. The benefit over prior art is that it reduces the computational load of the developed matching criterion so that it may be practically and efficiently implemented.

### Cyclic convolution in two-dimensions

Consider two discrete-time 1-dimensional series of equal length: $P = \{p_0, p_1, ..., p_{L-1}\}$ and $Q = \{q_0, q_1, ..., q_{L-1}\}$. These series are cyclic, i.e. $P_{-1} \equiv P_{L-1}, P_{-2} \equiv P_{L-2}$ etc. and likewise the elements of $Q$.

The cyclic convolution
$A = \{a_0, a_1, ..., a_{L-1}\} = P \otimes Q$ is given by:

$$a_i = \sum_{x=0}^{L-1} p_{i-x} q_x \qquad\qquad \text{Equation 12}$$

Because the series are cyclic over L samples:

$$a_i = \sum_{x=1-L}^{0} p_{i+x} q_{-x} = \sum_{x=1}^{L} p_{i+x} q_{-x} = \sum_{x=0}^{L-1} p_{i+x} q_{-x} \qquad\qquad \text{Equation 13}$$

Now consider the cyclic convolution between $P$ and a time reversed series $Q'$, where

$$Q' = \left\{ q_0, q_{-1}, q_{-2}, ..., q_{1-L} \right\} = \left\{ q_0, q_{L-1}, q_{L-2}, ..., q_1 \right\} = \left\{ q_0', q_1', ..., q_{L-1}' \right\}.$$

$B = \{b_0, b_1, ..., b_{L-1}\} = P \otimes Q'$ is given by:

$$b_i = \sum_{x=0}^{L-1} p_{i+x} q_{-x}' = \sum_{x=0}^{L-1} p_{i+x} q_x \qquad\qquad \text{Equation 14}$$

There is a notable similarity between this result and the numerator $\sum_{x=0}^{L-1}\left(p_{i+x}-\bar{p}_i\right)\left(q_x-\bar{q}\right)$ of equation 8, which is required to calculate the normalized cross correlation coefficient.

It is a textbook result that convolution in the time domain may be performed by multiplication in a transform domain such as that provided by the discrete Fourier transform. Applying the convolution theorem:

$$P \otimes Q' \equiv \mathfrak{I}^{-1}\left(\mathfrak{I}(P)\mathfrak{I}(Q')\right) \qquad\qquad \text{Equation 15}$$

where $\mathfrak{I}$ (P) is the discrete Fourier transform of $P$ and $\mathfrak{I}^{-1}$ (P) is the inverse discrete Fourier transform of $P$ .

Since $Q'$ is a time-reversed version of $Q$, they are related by the complex conjugate of the Fourier transform, so:

$$\mathfrak{I}(Q') = \mathfrak{I}(Q)^{\bullet} \qquad\qquad \text{Equation 16}$$

Thus

$$P \otimes Q' \equiv \mathfrak{I}^{-1}\left(\mathfrak{I}(P)\mathfrak{I}(Q)^{\bullet}\right) \qquad\qquad \text{Equation 17}$$

The result of equation 17 holds equally well for two dimensional series.

Since these are discrete-time series, a Fast Fourier Transform (FFT) algorithm may be employed. It is a known result that the radix-2 FFT, for power-of-2 values of $L$, may be performed using $\log_2 L$ passes comprising $L/2$ complex multiplies, each of which requires four real multiplies and additions.

Equation 15 extends to two dimensions, using the 2-dimensional discrete Fourier transform and 2-dimensional cyclic convolution. The 2-dimensional DFT of an image L by K pixels, both being powers of 2, may be performed by performing L FFTs of length K followed by K FFTs of length L .

Thus the 2-D DFT of an area 256*128 requires (256*64*7+128*128*8)*4 = 983,040 adds and multiplies.

**Normalised local cross-correlation from cyclic-convolution**

So far a matching criterion has been defined based on a maximised cross-correlation coefficient given by equation 8 for one dimension, and by equation 9 for two dimensions, showing that in two dimensions it is impractical to calculate by direct means for the purposes of a real-time motion estimator of useful search area.

A similarity has also been shown between the numerator of equation 8 and the convolution of two series, and it has been asserted that this may be calculated efficiently by means of the fast Fourier transform, the proof of which is well known and may be found in the literature.

**Theoretical Basis for the Numerator Calculation**

Considering the numerator of equation 8:

$$\sum_{x=0}^{15}\left(p_{i+x}-\bar{p}_i\right)\left(q_x-\bar{q}_0\right) \;=\; \sum_{x=0}^{15}p_{i+x}\left(q_x-\bar{q}_0\right)-\sum_{x=0}^{15}\bar{p}_i\left(q_x-\bar{q}_0\right)$$

$$=\sum_{x=0}^{15}p_{i+x}\left(q_x-\bar{q}_0\right)-\bar{p}_i\left(\left(\sum_{x=0}^{15}q_x\right)-16\bar{q}_0\right)$$

$$=\sum_{x=0}^{15}p_{i+x}\left(q_x-\bar{q}_0\right)$$

This is an important result. Provided $\bar{q}_0$ has been calculated from equation 3 then the $\bar{p}_i$ terms all cancel out, so they do not all have to be calculated at all. This is also apparent from considering the time domain convolution from frequency domain multiplication - if one DC term is zero then the product must be zero regardless of the other DC term.
The length of $P$ is now increased to $L$ samples, and $Q$ is padded to $L$ samples, having first removed the mean of the first 16 elements. Thus

$$P=\left\{p_0,p_1,\cdots,p_{L-1}\right\} \text{ and } Q=\left\{q_0-\bar{q}_0,q_1-\bar{q}_0,\cdots,q_{15}-\bar{q}_0,0,0,\cdots,0\right\}.$$

Considering the cyclic convolution result of equation 14, we obtain:

$$b_i=\sum_{x=0}^{15}p_{i+x}\left(q_x-\bar{q}_0\right) \qquad\qquad \text{Equation 19}$$

since $Q$ is padded with 0. Thus, the fact that the convolution is cyclic does not affect the validity of the convolution result provided $0\le i\le L$ -16 . Outside these limits is a boundary condition for which the results are not valid.

**Theoretical Basis for the Denominator Calculation**

The term $\displaystyle\sum_{x=0}^{15}\left(p_{i+x}-\bar{p}_i\right)^2$ found in the denominator of equation 8, is very expensive to calculate directly,

since $\displaystyle\bar{p}_i=\frac{1}{16}\sum_{x=0}^{15}p_{x+i}$ and is different at every point. However,

$$\sum_{x=0}^{15}\left(p_{i+x}-\bar{p}_i\right)^2 \;=\; \sum_{x=0}^{15}\left(p_{i+x}^2-2\bar{p}_i p_{i+x}+\bar{p}_i^2\right)$$

$$=\sum_{x=0}^{15}p_{i+x}^2-32\bar{p}_i\left(\frac{1}{16}\sum_{x=0}^{15}p_{i+x}\right)+16\bar{p}_i^2$$

$$=\sum_{x=0}^{15}p_{i+x}^2-16\bar{p}_i^2$$

$$\text{Equation 20}$$

which is the familiar result for the statistical variance of a sequence. We define a series

$$M = \{m_x\} = \begin{cases} 1 \mid 0 \le x \le 15 \\ 0 \mid 16 \le x \le L-1 \end{cases} \quad \text{and observe that:}$$

$$P \otimes M' = \left\{ \sum_{x=0}^{15} p_{i+x} \right\} \qquad \qquad \text{Equation 21}$$

and

$$P^2 \otimes M' = \left\{ \sum_{x=0}^{15} p_{i+x}^2 \right\} \qquad \qquad \text{Equation 22}$$

where $P^2 = \{p_x^2\}$.

This provides basis for an efficient calculation of all the cross correlation coefficients in equation 8.

$$C = \frac{\mathfrak{I}^{-1}\left(\mathfrak{I}(P)\mathfrak{I}(q_x - \bar{q}_0)^*\right)}{\sqrt{\left(\mathfrak{I}^{-1}\left(\left(\mathfrak{I}(P^2) - 16\mathfrak{I}(P)\right)\mathfrak{I}(M)^*\right)\right)\left(\sum_{x=0}^{15}(q_x - \bar{q}_0)^2\right)}} \qquad \text{Equation 23}$$

In two dimensions we obtain:

$$C = \frac{\mathfrak{I}^{-1}\left(\mathfrak{I}(R)\mathfrak{I}(s_{x,y} - \bar{s}_{0,0})^*\right)}{\sqrt{\left(\mathfrak{I}^{-1}\left(\mathfrak{I}(R^2)\mathfrak{I}(N)^*\right) - \left(\mathfrak{I}^{-1}\left(\frac{\mathfrak{I}(R)\mathfrak{I}(N)^*}{16}\right)\right)^2\right)\left(\sum_{x=0}^{15}\sum_{y=0}^{15}(s_{x,y} - \bar{s}_{0,0})^2\right)}}$$

$$\text{Equation 24}$$

where

$$N = \{n_{x,y}\} = \begin{cases} 1 \mid 0 \le x \le 15 \cap 0 \le y \le 15 \\ 0 \mid 16 \le x \cup 16 \le y \end{cases}$$

$\mathfrak{I}(N)^*$ is a constant matrix, so equation 24 requires three forward transforms and three inverse Fourier transforms to compute. Each of these may be performed using 983,040 adds and multiplies for a search area of 256 x 128. The total computational load is approximately 6E6 adds and multiplies per macroblock, which is a significant saving on the direct calculation requiring 2.7E7 additions and 1.35E7 multiplications.

**Apparatus for calculation**

The mathematical considerations above have shown that a normalised cross-correlation coefficient is a useful criterion on which one area of an image might be matched to another. Furthermore we have shown that the cross-correlation coefficient may be more efficiently calculated by means of three 2-dimensional forward and inverse Fourier transforms.

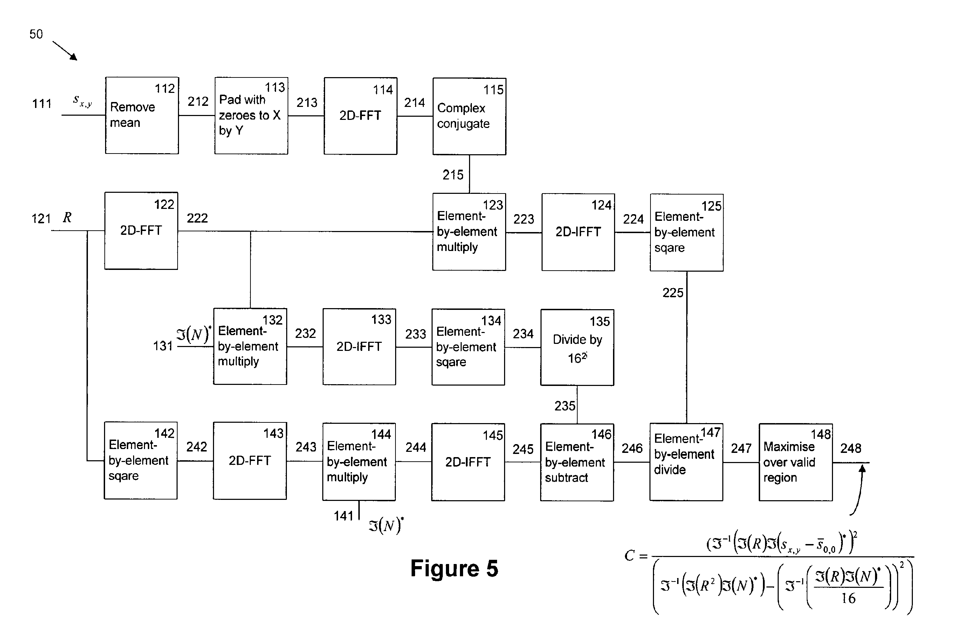

Figure 5 shows a motion estimator 50 according to an embodiment of the invention.

A mean removal stage 112 has an input 111 and an output to a pad-with-zeros stage 113. An output of the pad-with-zeros stage is input to a first 2D Fast Fourier Transform stage 114 which outputs to a complex conjugate stage 115 with an output to a first input of a first element-by-element multiplication stage 123.

A second input 121 of the motion estimator 50 is to a second 2D Fast Fourier Transform stage 122 with an output to a second input of the first element-by-element multiplication stage 123. The first element-by-element multiplication stage 123 has an output to a first 2D Inverse Fast Fourier Transform stage 124 which outputs to a first element-by-element squaring stage 125 with an output to a first input of an element-by-element divide stage 147.

A third input 131 of the motion estimator 50 is to a first input of a second element-by-element multiply stage 132 which has a second input from the output of the second 2D Fast Fourier Transform stage 122. An output of the second element-by-element multiply stage 132 is to a second 2D Inverse Fast Fourier Transform stage 133 which has an output to a second element-by-element squaring stage 134. A divide by 256 stage 135 has input from the second element-by-element squaring stage 134 and an output to a second input of a element-by-element subtract stage 146.

In parallel to the second 2D Fast Fourier Transform stage 122, the second input 121 is also to a third element-by-element squaring stage 142 which has an output to a third 2D Fast Fourier Transform stage 143. A third element-by-element multiplication stage 144 has an input from the third 2D Fast Fourier Transform stage 143, a fourth input 141 of the motion estimator 50 and an output to a third 2D Inverse Fast Fourier Transform stage 145. The third 2D Inverse Fast Fourier Transform stage 145 has an output to a second input of the element-by-element subtraction stage 146. The element-by-element division stage 147 has a second input from the element-by-element subtraction stage 146 and an output to a maximisation engine 148 which has an output 248 of the motion estimator 50.

In use, a source macroblock $s_{x,y}$ is introduced at the first input 111 of the motion estimator 50, and passes through the mean removal stage 112 to give a zero-mean macroblock $(s_{x,y} - \bar{s}_{0,0})$ 212, and this is then padded with zeros to give a padded macroblock 213 of the same size as a reference search area R introduced at the second input 121 of the motion estimator 50. Both the padded macroblock 213 and the reference search area R then undergo respective 2-dimensional (fast) discrete Fourier transforms to give transformed macroblock $\mathfrak{J}(s_{x,y} - \bar{s}_{0,0})$ 214 and transformed search area $\mathfrak{J}(R)$ 222, respectively. The transformed macroblock 214 undergoes a complex conjugate operation, and the result $\mathfrak{J}(s_{x,y} - \bar{s}_{0,0})^*$ 215 is then multiplied element-by-element with the transformed reference search area $\mathfrak{J}(R)$ 222 to give a transformed un-normalised cross-correlation $\mathfrak{J}(R)\mathfrak{J}(s_{x,y} - \bar{s}_{0,0})^*$ 223.

The transformed reference search area $\mathfrak{J}(R)$ 222 also undergoes an element-by-element multiplication with the conjugate of a transformed normalisation matrix $\mathfrak{J}(N)^*$ input at the third input 131 of the motion estimator 50, and the resulting transformed local sum $\mathfrak{J}(R)\mathfrak{J}(N)^*$ 232 is inverse transformed to give a local sum $\mathfrak{J}^{-1}(\mathfrak{J}(R)\mathfrak{J}(N)^*)$ 233 at every point. This is elementally squared to give a squared local sum $(\mathfrak{J}^{-1}(\mathfrak{J}(R)\mathfrak{J}(N)^*)^2$ 234 and this is divided by $16^2$ to give a scaled squared local sum

$$\left( \mathfrak{J}^{-1}\left( \frac{\mathfrak{J}(R)\mathfrak{J}(N)^*}{16} \right) \right)^2 235.$$

The reference search area R input at the second input 121 of the motion estimator 50 is also elementally squared to produce a squared reference search area $R^2$ 242, and this is Fast Fourier transformed to give a transformed reference squared search area $\mathfrak{J}(R^2)$ 243. This is then multiplied by a transformed normalisation matrix $\mathfrak{J}(N)^*$ input at the fourth input 141 of the motion estimator 50 to give transformed local sums $\mathfrak{J}(R^2)\mathfrak{J}(N)^*$ 244 of the squared reference search area $R^2$. These are then inverse transformed to give the local sums $\mathfrak{J}^{-1}(\mathfrak{J}(R^2)\mathfrak{J}(N)^*)$ 245 of the squared reference search area $R^2$. The scaled squared local sum

$$\left( \mathfrak{J}^{-1}\left( \frac{\mathfrak{J}(R)\mathfrak{J}(N)^*}{16} \right) \right)^2 235$$

is subtracted from this to give the squared normalisation factor $\left( \mathfrak{I}^{-1} \left( \mathfrak{I}(R^2) \mathfrak{I}(N)^* \right) - \left( \mathfrak{I}^{-1} \left( \dfrac{\mathfrak{I}(R) \mathfrak{I}(N)^*}{16} \right) \right)^2 \right)$ 246.

The transformed un-normalised cross-correlation $\mathfrak{I}^{-1}(\mathfrak{I}(R)\mathfrak{I}(N)^*)$ 223 is inverse transformed to give the un-normalised cross-correlation $\mathfrak{I}^{-1}(\mathfrak{I}(R)\mathfrak{I}(s_{x,y} - \bar{s}_{0,0})^*)$ 224. This is elementally squared to give the squared un-normalised cross-correlation $(\mathfrak{I}^{-1}(\mathfrak{I}(R)\mathfrak{I}(s_{x,y} - \bar{s}_{0,0})^*$ 225, and this is divided by the squared normalisation factor

$$\left( \mathfrak{I}^{-1} \left( \mathfrak{I}(R^2) \mathfrak{I}(N)^* \right) - \left( \mathfrak{I}^{-1} \left( \frac{\mathfrak{I}(R) \mathfrak{I}(N)^*}{16} \right) \right)^2 \right) \quad 246,$$ to give the squared normalised cross-cor-

relation $\quad C = \dfrac{\left| \mathfrak{I}^{-1} \left( \mathfrak{I}(R) \mathfrak{I}(s_{x,y} - \bar{s}_{0,0})^* \right) \right| \mathfrak{I}^{-1} \left( \mathfrak{I}(R) \mathfrak{I}(s_{x,y} - \bar{s}_{0,0})^* \right)}{\left( \mathfrak{I}^{-1} \left( \mathfrak{I}(R^2) \mathfrak{I}(N)^* \right) - \left( \mathfrak{I}^{-1} \left( \dfrac{\mathfrak{I}(R) \mathfrak{I}(N)^*}{16} \right) \right)^2 \right)} \quad 247.$ It will be noted that this differs from a (magnitude) square of the normalised cross-correlation factor of equation 24 by the factor $\dfrac{1}{\left( \displaystyle\sum_{x=0}^{15} \sum_{y=0}^{15} (s_{x,y} - \bar{s}_{0,0})^2 \right)}$

which is a constant for a given source macroblock independent of the search area and the expression may therefore be used to find a maximum value to obtain a best fit motion vector. This expression is input to the maximisation engine 148 and a resultant best score or scores and corresponding motion vector or vectors are produced at the output 248.

## Extensions and optimisations

The method and apparatus described above may be further improved as described below to provide a further reduction of the computational load.

## Efficient macroblock transform

The padded macroblock has only non-zero terms in the first few rows and columns. Therefore, if the two dimensional FFT is performed by horizontal transforms followed by vertical transforms only a few horizontal transforms actually have to be carried out because the remaining rows are all zero. Furthermore, not all of the FFT passes in the vertical transforms need to be carried out completely, particularly in the earlier stages, because many of the elements are zero.

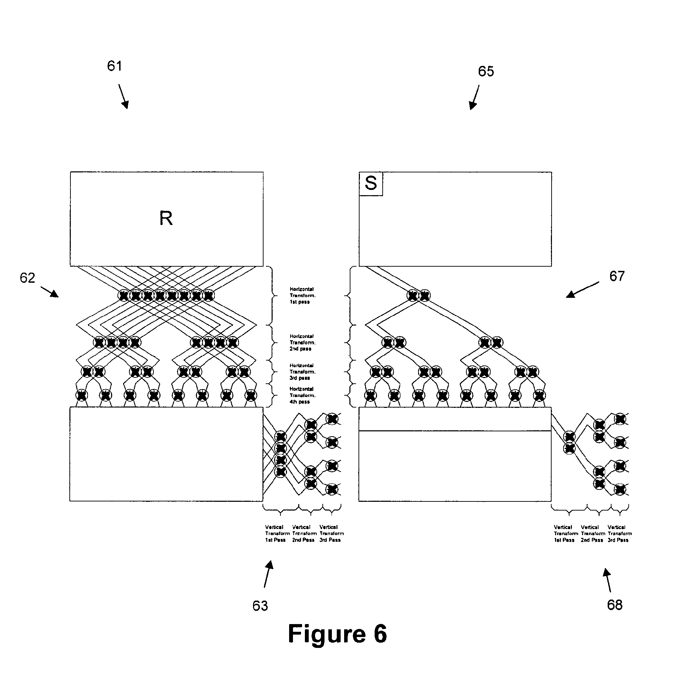

Figure 6 illustrates a concept of a reduced transform. The left hand side 61 shows a two-dimensional fast Fourier transformation of the reference area R, of area 16 by 8 pels. This requires eight horizontal transforms 62 to be performed, one on each of eight rows, each comprising four passes of eight butterflies, followed by sixteen vertical transforms 63, each comprising three passes of four butterflies. The right hand side 65 shows the reduced transform for the source macroblock S, of size 2 pels by 2 pels, into an area of the same size as R. The transform now requires only two horizontal transforms 67, each comprising a pass of 2, a pass of 4 and 2 passes of 8 butterflies, followed by 16 vertical transforms 68, each comprising a pass of 2 and 2 passes of 4 butterflies. The total load in butterflies for the R transform is 8*4*8+16*3*4 = 448 butterflies. The total load for the S transform is 2 * (2+4+8+8) + 16*(2+4+4) = 204 butterflies.

Scaling this up to a realistic case, if R is 256 pels horizontally and 128 pels vertically, and S is 16 pels by 16 pels, then the total load in butterflies for the R transform is (128 rows)*(8 passes)*(128 butterflies) + (256 columns)*(7 passes)*(64 butterflies) = 245,760 butterflies. The S transform requires

$$(16 \text{ rows})*(16+32+64+128*5 \text{ butterflies}) + (256 \text{ rows})*(16+32+5*64$$

$$\text{butterflies}) = 106{,}240 \text{ butterflies.}$$

**Field separation via real and imaginary parts**

Because of the prevalent use of interlaced video, it is often desirable to find the scores for matches between fields of the macroblock and fields in the image and then combine these to provide scores for the overall macroblock. There is an efficient method for calculating, which also reduces the computational load of the overall engine.

The Fourier transform applies to complex series. So, in this embodiment, the even field lines in the search area are coded as real elements, and the odd field lines as imaginary. Coding the first field lines of R as real and the second field as imaginary reduces a cost of an R transform because a number of rows presented to the transform is halved. (64 rows)*(8 passes)*(128 butterflies) + (256 columns)*(6 passes)*(32 butterflies) = 114,688 butterflies are now required.

The two fields of the source macroblock are transformed separately. Using the efficient transform above, each transform now requires (8 rows)*(16+32+64+128*5 butterflies) + (256 rows)*(8+16+4*32 butterflies) = 44,928 butterflies. The total load for the 2 S transforms is then 89,856 butterflies.

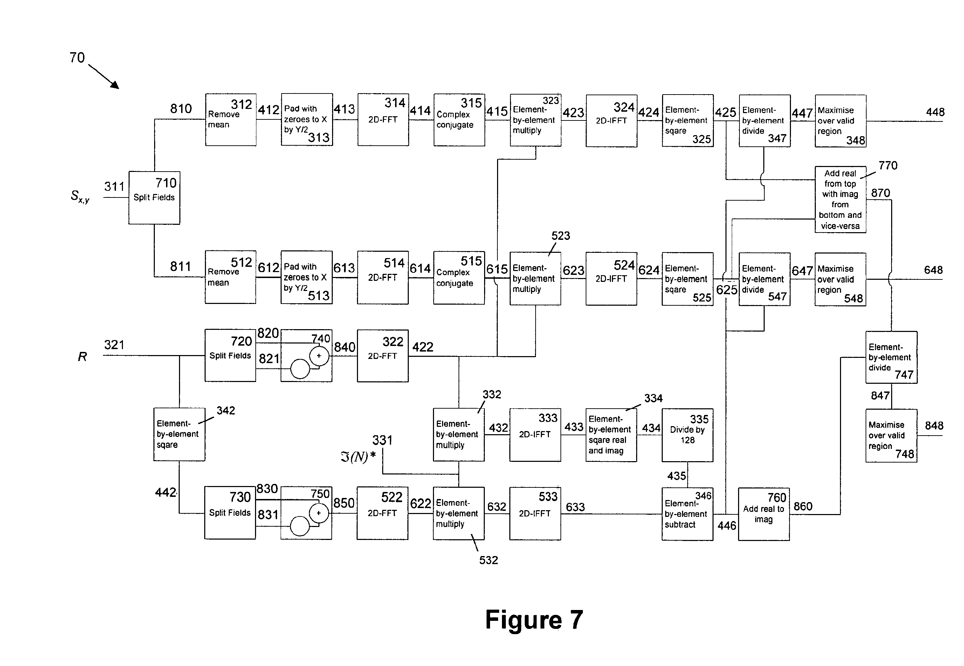

Figure 7 shows an embodiment 70 of a motion estimator including this extension.

A first split field stage 710 has a first input 311 of the motion estimator 70 and two outputs to parallel mean removal stages 312, 512 which have outputs to parallel pad-with-zeros stages 313, 513. Outputs of the pad-with-zeros stages 313, 513 are input to parallel first 2D Fast Fourier Transform stages 314, 514 which output to parallel complex conjugate stages 315, 515, with outputs to first inputs of parallel first element-by-element multiplication stages 323, 523 respectively.

A second input 321 of the motion estimator 70 is to a second split field stage 720 which has two outputs to a first stage 740 for multiplying, as illustrated, a first input by $i = \sqrt[4]{-1}$ before adding to a second input, whereas, in practice the top and bottom search fields are input to a real and imaginary inputs of a second Fast Fourier Transform stage 322 respectively, with an output to second inputs of the first pair of parallel element-by-element multiplication stages 323, 523. The first parallel pair of element-by-element multiplication stages 323, 523 have outputs to a first parallel pair of 2D Inverse Fast Fourier Transform stages 324, 524 which output to a first parallel pair of element-by-element squaring stages 325, 525 with outputs to first inputs of parallel element-by-element divide stages 347, 547.

A third input 331 of the motion estimator 70 is to first inputs of a second pair of parallel element-by-element multiply stages 332, 532 which have second inputs from outputs of the second pair of parallel 2D Fast Fourier Transform stages 322, 522. Outputs of the second pair of parallel element-by-element multiply stages 332, 532 are to a second parallel pair of 2D Inverse Fast Fourier Transform stages 333, 533 which have outputs to a second element-by-element squaring stage 334 and to a second input of an element-by-element subtract stage 346 respectively. A divide by 128 stage 335 has an input from the second element-by-element squaring stage 334 and an output to a first input of the element-by-element subtract stage 346, respectively.

In parallel to the second split field stage 720, the second input 321 of the motion estimator 70 is also to a third element-by-element squaring stage 342 which has an output to a third split field stage 730 which has two outputs to a second stage 750 for multiplying, as illustrated, a first input by $i = \sqrt[4]{-1}$ before adding to a second input, whereas, in practice the squared top and bottom search fields are input respectively to real and imaginary inputs of one of the second pair of parallel 2D Fast Fourier Transform stages 522. The parallel element-by-element division stages 347, 547 have first inputs from the element-by-element subtraction stage 346 and outputs to parallel maximisation engines 348, 548 which have parallel outputs 448, 648 of the motion estimator 70.

Output from the element-by-element subtract stage 346 is also input to an add real to imaginary stage 760 output of which is input to one input of a second element-by element divide stage 747. Outputs from the parallel element-by-element squaring stages 325, 525 to a second add real and imaginary stage 770. An output of the second add real to imaginary stage 770 is input to a second input of the element-by-element divider 747. An output of the element-by-element divider 747 is to a third maximisation engine 748 with an output 848 of the motion estimator 70 as an approximation to the overall match criterion as described below.

In use a 16×16 pixel source macroblock input at the first input 311 of the motion estimator 70 is split into two 16×8 fields, the top field 810 of the macroblock and bottom field 811 of the macroblock. These separately undergo mean removal to give a zero mean top field of the macroblock 412 and zero mean bottom field 612 of the macroblock. These then undergo padding to a size X by Y/2 where X is the horizontal dimension of the search area and Y is the vertical dimension, to give padded top field 413 of the macroblock and padded bottom field 613 of the macroblock. These undergo 2D FFTs to give a transformed top field 414 of the macroblock and transformed bottom field 614 of the macroblock, and then complex conjugate operations to give the conjugate transformed top field 415 of the macroblock and conjugate transformed bottom field 615 of the macroblock.

A reference search area input at the second input 321 of the motion estimator 70, having size X by Y pels is split into a top search field 820 and bottom search field 821, each of size X by Y/2 pels. The bottom search field 821 is illustrated as multiplied by $i = \sqrt[4]{-1}$ and then added to the top search field 820 to give a complex search picture 840 of size X by Y/2 pels. In practice, the top and bottom search fields are input, respectively, to real and imaginary inputs of a 2D FFT stage to give a transformed complex search picture 422, which is elementally multiplied with both the conjugate transformed fields 415, 615 of the macroblock to give the transformed un-normalised complex top field correlation 423 and transformed un-normalised complex bottom field correlation 623. These undergo inverse 2-D FFTs to give the un-normalised complex top field correlation 424 and un-normalised complex bottom field correlation 624.

The real part of the un-normalised complex top field correlation 424 is representative of the matches between the top field 810 of the macroblock and the top field 820 of the search area. The bottom part of the un-normalised complex top field correlation 624 is representative of the matches between the top field 810 of the macroblock and the bottom field 821 of the search area. Similarly, the real part of the un-normalised complex bottom field correlation 624 is representative of the matches between the bottom field 811 of the macroblock and the top field 820 of the search area. The bottom part of the un-normalised complex bottom field correlation 624 is representative of the matches between the bottom field 811 of the macroblock and the bottom field 821 of the search area. The un-normalised complex field correlations 424, 624 undergo an elemental squaring of the real and imaginary coefficients separately, giving the squared un-normalised complex top field correlation 425 and squared un-normalised complex bottom field correlation 625.

The (real) search area input at second input 321 undergoes an elemental squaring to give a squared search area 442. This is then split into a squared search top field 830 and squared search bottom field 831. The squared search bottom field 831 is then illustrated as multiplied by $i = \sqrt[4]{-1}$ and added to the squared search top field 830 to give a complex squared search field 850. In practice, the squared top search field and the squared bottom search field are input, respectively, to real and imaginary inputs of a 2-D FFT stage to give a transformed complex squared search area 622. The transformed complex search area 422 and transformed complex squared search area 622 are both elementally multiplied with a transformed normalisation matrix input at third input 331. The transformed normalisation matrix is the 2D-FFT of an image having ones in the non-padded region of the padded top field of the macroblock and zeros elsewhere, i.e. the 2-D FFT of an array of size X by Y/2 pels with ones in the top left 16 by 8 rectangle and zeros elsewhere. The imaginary part of the untransformed normalisation matrix is all zero. Following this multiplication, the transformed local sums of the complex search area 432 and transformed local sums of the complex squared search area 632 are inverse transformed via the 2-D IFFT to give local sums of the complex search area 433 and local sums of the squared complex search area 633. The local sums of the complex search area 433 then undergo a squaring of the real and imaginary coefficients, to give the squared local sums of the complex search area 434. This is divided by 128 to give the scaled squared local sums of the complex search area 435. This is subtracted from the local sums of the complex squared search area 633 to give the squared complex normalisation matrix 446. The real parts of the squared un-normalised complex top field correlation 425 and squared un-normalised complex bottom field correlation 625 are elementally divided by the real part of the squared complex normalisation matrix 446, and similarly the imaginary parts are divided, giving the squared complex top field correlation 447 and squared complex bottom field correlation 647.

The real part of the squared top field correlation 447 is the local normalised cross correlation of the top field 810 of the macroblock with the top field of the search area 820. The imaginary part of the squared top field correlation 447 is the local normalised cross correlation of the top field 810 of the macroblock with the bottom field 821 of the search area. The real part of the squared bottom field correlation 647 is the local normalised cross correlation of the bottom field 811 of the macroblock with the top field 820 of the search area. The imaginary part of the squared top field correlation 447 is the local normalised cross correlation of the bottom field 811 of the macroblock with the bottom field 821 of the search area. These results are maximised to return the best match or matches for the top field of the macroblock 448 and best match or matches for the bottom field of the macroblock 648.

Furthermore, the un-normalised results may be added together, taking the real part from the squared un-normalised top field correlation 425 added to the corresponding imaginary part of the squared un-normalised complex bottom field correlation 625, returned as a real, and also taking the imaginary part from the squared un-normalised top field correlation 425 added to the corresponding real part of the squared un-normalised complex bottom field correlation 625, returned as imaginary, to give a complex approximation to the un-normalised overall macroblock correlation 870. Note that "corresponding" does not necessarily mean "co-located" since in the latter of these additions an offset of the top field must be allowed for, due to spatial considerations.

The complex squared normalisation matrix 446 may also have its real and imaginary parts added together, returned as real, giving an approximation to the overall normalisation 860. The approximation 870 to the un-normalised overall macroblock correlation may then be divided by the approximation 860 to the overall normalisation to give a complex approximation to the overall local normalised squared cross-correlation 847, which may be maximised to produce a best match or matches for the whole macroblock 848.

There are several similar but distinct ways of obtaining approximations to the overall correlation result. For instance we might combine results 424, 624, 433, 633 immediately after the 2-D IFFT operations instead, but this would require more additional units to calculate the combined normalisation.

In this application we disclose:

■ a matching criterion for the best match area based on the normalised cross-correlation coefficient,

■ an efficient transform-domain method for calculating the matching criterion, and

■ apparatus for finding the best match according to the matching criterion by means of the transform domain method (which may be embodied in a computer program or in dedicated logic).

The key benefits associated with matching using the described normalised correlation coefficient include improved performance over the more usual sum of absolute differences technique. The method is also invariant to linear transformations of the luminance levels of the images and is therefore particularly useful in processing images in which fading to and from black occurs or when the image is affected by transient flashing effects; both these conditions are problematic in current methods of deriving motion vectors.

## Claims

1.  A motion estimator for image processing arranged to find a motion vector from a portion of a search area in a reference picture to a portion of a source picture by finding a maximum of a 2-dimensional normalised cross-correlation surface between the portion of the source picture and the portion of the reference search area using a transform domain.

2.  A motion estimator as claimed in claim 1, comprising:

    a. an arithmetic mean stage connected to a first input of the motion estimator arranged to obtain an arithmetic mean of a first sequence representing elements of the portion of the source picture and to subtract the arithmetic mean from each element to form a zero-mean sequence;
    b. a padding stage connected to the arithmetic mean stage arranged to pad the zero-mean sequence with zeros to a length of a second sequence representing the reference search area to form a padded sequence;
    c. a first two-dimensional fast Fourier transform stage connected to the padding stage arranged to obtain a Fourier transform of the padded sequence;
    d. a complex conjugate stage connected to the first two-dimensional fast Fourier transform stage and arranged to form a complex conjugate of the transformed padded sequence.

3.  A motion estimator as claimed in claim 2 further comprising:

    a. a second two-dimensional fast Fourier transform stage connected to a second input of the motion estimator and arranged to perform a fast Fourier transformation of the second sequence;
    b. a multiplication stage connected to the complex conjugate stage and to the second two-dimensional fast Fourier transform stage and arranged to multiply the elements of the complex conjugate of the transformed padded sequence by the elements of the transformed second sequence to form a transformed un-normalised cross-correlation;
    c. a first two-dimensional inverse fast Fourier transform stage connected to the multiplication stage and arranged to form a un-normalised cross-correlation;
    d. a magnitude squaring stage connected to the first two-dimensional inverse fast Fourier transform stage and arranged to square the magnitude of the elements of the un-normalised cross-correlation to form a magnitude squared un-normalised cross-correlation surface.

4.  A motion estimator as claimed in any of the preceding claims further comprising:

a. a second squaring stage connected to the second input of the motion estimator and arranged to square the elements of the second sequence to form a squared search area;

b. a third two-dimensional fast Fourier transform stage connected to the second squaring stage and arranged to form a transform of the squared search area;

c. a third multiplication stage connected to the third two-dimensional fast Fourier transform stage and arranged to multiple by a complex conjugate of a Fourier transform of a normalisation matrix to form transformed local sums of the squared search area;

d. a third two-dimensional inverse fast Fourier transform stage connected to the third multiplication stage and arranged to form local sums of the squared search area.

5.  A motion estimator as claimed in claims 3 or 4, further comprising:

a. a second multiplication stage connected to the second two-dimensional fast Fourier transform stage arranged to multiply the elements of the transformed search area by a complex conjugate of a Fourier transformed normalisation matrix to form a transformed local sum;

b. a second two-dimensional inverse fast Fourier transform stage connected to the second multiplication stage and arranged to form a local sum for each element;

c. a first squaring stage connected to the second two-dimensional inverse fast Fourier transform stage and arranged to square the local sum to form a squared local sum;

d. a divider stage connected to the first squaring stage and arranged to divide the squared local sum by a number of elements in the first sequence to form a scaled squared local sum;

e. a subtraction stage connected to the divider stage and to the third two-dimensional inverse fast Fourier transform stage and arranged to subtract the scaled squared local mean from the local sums of the squared search area to form a squared normalisation factor of the normalised cross-correlation coefficient.

6.  A motion estimator as claimed in claim 5, further comprising a second divider stage connected to the subtraction stage and to the magnitude squaring stage and arranged to divide the squared un-normalised correlation factor by the squared normalisation factor to form a square of the normalised cross-correlation coefficient and output to a maximising stage arranged to maximise the normalised cross-correlation coefficient to find an optimum motion vector for the source macroblock.

7.  A motion estimator as claimed in any of claims 1-6 adapted for a video signal having interlaced fields in which the fields are processed in parallel as real and imaginary parts respectively.

8.  A motion estimator as claimed in claim 7, comprising a first split field stage connected to the first input arranged to split the first sequence into two sequences representing first and second interlaced fields respectively and parallel streams as claimed in claims 1 to 3 for calculating the numerators of the normalised cross-correlation coefficient for each field respectively.

9.  A method of estimating motion for image processing comprising the steps of finding a motion vector from a portion of a search area in a reference picture to a portion of a source picture by finding a maximum of a 2-dimensional normalised cross-correlation coefficient between the portion of the source picture and the portion of the reference search area using a transform domain.

10. A method as claimed in claim 9, comprising the steps of:

a. forming a first sequence representing elements of the portion of the source picture;

b. obtaining an arithmetic mean of the elements and subtracting the arithmetic mean from each element to form a zero-mean sequence;

c. padding the zero-mean sequence with zeros to a length of a second sequence representing the reference search area to give a padded sequence;

d. performing a two-dimensional fast Fourier transform of the padded sequence to form a transformed padded sequence;

e. forming a complex conjugate of the transformed padded sequence.

11. A method as claimed in claim 10 comprising the further steps of:

a. performing a two-dimensional fast Fourier transform of the second sequence;

b. multiplying the elements of the complex conjugate of the transformed padded sequence by the elements of the transformed second sequence to form a transformed un-normalised cross-correlation coefficient;

c. forming a un-normalised cross-correlation by inverse transformation of the transformed un-normalised cross-correlation coefficient;

d. squaring the transformed un-normalised cross-correlation to form a squared transformed un-normalised cross-correlation coefficient.

**12.** A method as claimed in any of claims 9 to 11, comprising the further steps of:

a. squaring the elements of the second sequence to form a squared search area;

b. forming a two-dimensional fast Fourier transform of the squared search area to form a transformed squared search area;

c. multiplying by a complex conjugate of a Fourier transform of a normalisation matrix to form transformed local sums of the squared search area;

d. performing a two-dimensional inverse Fourier transform of the transformed local sums of the squared search area to form local sums of the squared search area.

**13.** A method as claimed in claims 11 or 12, comprising the further steps of:

a. normalising the Fourier transformed search area by multiplying the elements by a complex conjugate of a Fourier transformed normalisation matrix to form a transformed local sum;

b. performing a two-dimensional inverse Fourier transform of the transformed local mean to form a local sum for each element;

c. squaring the elements of the local sum to form a squared local sum;

d. dividing the squared local sum by the number of elements in the first sequence to form a scaled squared local sum;

e. subtracting the scaled squared local sum from the local sums of the squared search area to form a squared normalisation factor of the normalised cross-correlation coefficient.

**14.** A method as claimed in claim 13, comprising dividing the squared un-normalised correlation factor by the squared normalisation factor to form a square of the normalised cross-correlation coefficient and maximising the normalised cross-correlation coefficient to find an optimum motion vector for the source macroblock.

**15.** A method as claimed in claims 9 to 14 for a video signal having interlaced fields in which the fields are processed in parallel as real and imaginary parts respectively.

**16.** A computer program comprising code means for performing all the steps of the method of any of claims 9 to 15 when the program is run on one or more computers.

# Figure 1

**Figure 2**

**Figure 3**

**Figure 4**

EP 1 879 400 A1

50

111 $s_{x,y}$ | 112 Remove mean | 212 | 113 Pad with zeroes to X by Y | 213 | 114 2D-FFT | 214 | 115 Complex conjugate

215

121 $R$ | 122 2D-FFT | 222

123 Element-by-element multiply | 223 | 124 2D-IFFT | 224 | 125 Element-by-element sqare

225

131 $\Im(N)^{*}$ | 132 Element-by-element multiply | 232 | 133 2D-IFFT | 233 | 134 Element-by-element sqare | 234 | 135 Divide by $16^{2}$

235

142 Element-by-element sqare | 242 | 143 2D-FFT | 243 | 144 Element-by-element multiply | 244 | 145 2D-IFFT | 245 | 146 Element-by-element subtract | 246 | 147 Element-by-element divide | 247 | 148 Maximise over valid region | 248

141 $\Im(N)^{*}$

**Figure 5**

$$C = \frac{\left(\Im^{-1}\left(\Im(R)\Im\left(s_{x,y} - \bar{s}_{0,0}\right)^{*}\right)\right)^{2}}{\left(\Im^{-1}\left(\Im(R^{2})\Im(N)^{*}\right) - \left(\Im^{-1}\left(\frac{\Im(R)\Im(N)^{*}}{16}\right)\right)^{2}\right)}$$

Figure 6

**Figure 7**

**European Patent Office**

**EUROPEAN SEARCH REPORT**

Application Number

EP 07 25 2706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 535 288 A (CHEN CHIH-KANG [US] ET AL) 9 July 1996 (1996-07-09) | 1,9 | INV. H04N7/26 |
| A | * column 2, line 57 - column 4, line 42 * | 2-8, 10-16 | |
| | * column 6, line 27 - column 10, line 49 * * figures 4-7 * | | |
| | ----- | | |
| X | ESSANNOUNI F ET AL: "A new fast full search block matching algorithm using frequency domain" SIGNAL PROCESSING AND ITS APPLICATIONS, 2005. PROCEEDINGS OF THE EIGHTH INTERNATIONAL SYMPOSIUM ON SYDNEY, AUSTRALIA AUGUST 28-31, 2005, PISCATAWAY, NJ, USA,IEEE, 28 August 2005 (2005-08-28), pages 559-562, XP010882854 ISBN: 0-7803-9243-4 | 1,9 | |
| A | * paragraphs [0002], [0003], [0006] * | 2-8, 10-16 | |
| | ----- | | |
| X | ARGYRIOU V ET AL: "Estimation of sub-pixel motion using gradient cross-correlation" ELECTRONICS LETTERS, IEE STEVENAGE, GB, vol. 39, no. 13, 26 June 2003 (2003-06-26), pages 980-982, XP006020580 ISSN: 0013-5194 | 1,7,9,15 | TECHNICAL FIELDS SEARCHED (IPC) H04N |
| A | * the whole document * | 2-6,8, 10-14 | |
| | ----- | | |
| X | US 6 611 560 B1 (KRESCH RENATO [IL] ET AL) 26 August 2003 (2003-08-26) | 1,9 | |
| A | * column 1, line 60 - column 4, line 14 * | 2-8, 10-16 | |
| | * column 5, line 7 - column 15, line 55 * * figures 1-7 * | | |
| | ----- | | |

The present search report has been drawn up for all claims

| Place of search | Date of completion of the search | Examiner |
|---|---|---|
| Munich | 13 November 2007 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 25 2706

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2007

| Patent document cited in search report | | Publication date | Patent family member(s) | | Publication date |
|---|---|---|---|---|---|
| US 5535288 | A | 09-07-1996 | WO | 9323816 A1 | 25-11-1993 |
| US 6611560 | B1 | 26-08-2003 | NONE | | |

For more details about this annex : see Official Journal of the European Patent Office, No. 12/82